# EUROPEAN PATENT APPLICATION

(11) **EP 4 792 971 A1**
(43) Date of publication of application: **19.08.2026**
(21) Application number: 25827326.7
(22) Date of filing: 16.06.2025
(51) Int. Cl.: B23K 26/21, H01M 50/536, H01S 3/067, B23K 101/36

(54) **LEAD-TAB LASER WELDING METHOD AND LEAD-TAB LASER WELDING APPARATUS**

(30) Priority: 24.06.2024 KR 20240082265
(71) Applicant: LG Energy Solution, Ltd., Seoul 07335 (KR)
(72) Inventor: KIM, Seong Nam, Daejeon 34122 (KR); YOON, Byeong Geol, Daejeon 34122 (KR); HAN, Chang Min, Daejeon 34122 (KR); NA, Seung Ho, Daejeon 34122 (KR)
(74) Representative: Goddar, Heinz J.
(86) International application number: PCT/KR2025/008251
(87) International publication number: WO 2026/005361

(57) **Abstract**

The present invention relates to a lead-tab laser welding method for joining a lead portion and a tab portion, and the lead-tab laser welding method may comprise a seating step of disposing the lead portion and the tab portion of a secondary battery so as to overlap each other, and a laser welding step in which a welding unit forms a plurality of beads in an overlap region of the lead portion and the tab portion, wherein in the laser welding step, with respect to first, second, and third positions sequentially located along a first direction in the overlap region of the lead portion and the tab portion, the beads are formed in the order of the first position, the third position, and the second position.

## Description

### Technical Field

The present invention relates to a lead-tab laser welding method and a lead-tab laser welding device, and more specifically, relates to a lead-tab laser welding method capable of minimizing welding defects and enhancing mechanical strength of overlap regions between leads and tabs, and a lead-tab laser welding device for performing the same.

This application claims the benefit of priority to Korean Patent Application No. 10-2024-0082265 dated June 24, 2024, the disclosure of which is incorporated herein by reference in its entirety.

### Background Art

With the recent rapid growth of the electric vehicle market, the demand for largecapacity batteries also increases significantly. Lithium-ion batteries, which have high energy densities and safety, are primarily used as batteries for electric vehicles, and these batteries are often manufactured in the form of pouch-type cells. In the manufacture of pouch-type lithium-ion batteries, a welding process for connection of electrodes and tabs is required, where qualities and reliability of joints directly impact battery performance.

A process for manufacturing secondary batteries can be broadly divided into an electrode manufacturing process, an electrode assembling process, and a battery activating process. The electrode manufacturing process is a process of mixing active materials of positive and negative electrodes, a conductive material, and a binder to produce a slurry, coating such a slurry onto a metal current collector, such as a copper or aluminum sheet, and drying it. The electrode assembling process is a process of laminating the manufactured electrodes and separators to make a basic structure of a battery, injecting an electrolyte, and sealing the same. The battery activating process is a process of performing repeated charging and discharging, to activate the battery's performance.

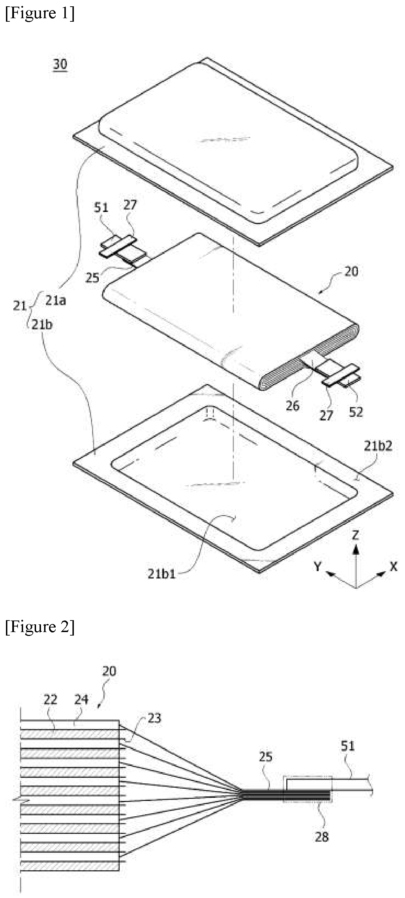

Figure 1 is an exploded perspective diagram showing components of a typical pouch-type secondary battery (30). Figure 2 is a cross-sectional diagram showing an intra-partial appearance of a typical secondary battery (30).

Referring to Figures 1 and 2, the pouch-type secondary battery (30) comprises an electrode assembly (20) including positive electrodes (24) and negative electrodes (22), having electrode active materials applied to electrode plates, and separators (23) interposed between the positive electrodes (24) and the negative electrodes (22). Furthermore, a positive electrode tab (25) extending to one side of a plurality of positive electrodes (24) and a positive electrode leads (51) are welded in an overlap region (28) overlapped with each other. Furthermore, a negative electrode tab (26) extending to one side of a plurality of negative electrodes (22) and a negative electrode lead (52) are welded in an overlap region (not shown) overlapped with each other.

Then, such an electrode assembly (20) is accommodated in an accommodating portion (21b1) formed in a lower pouch film (21b). At this time, the electrode assembly (20) has a plurality of electrode leads (51, 52), which can be divided into a positive electrode lead (51) and a negative electrode lead (52). In a state where such an electrode assembly (20) is accommodated in the accommodating portion (21b1), it is composed of an order of injecting an electrolyte, performing initial charging and discharging (activation process), and then heatfusing the edge portions (21b2) of the upper pouch film (21a) and the lower pouch film (21b) to be sealed. Furthermore, the secondary battery can be provided with a protective film (27) for electrical insulation between the electrode leads and the pouch film (21b).

Conventionally, laser welding has been widely utilized for welding electrode tabs (also referred to as tab portions) and electrode leads (also referred to as lead portions). Conventionally, a method of performing pulse welding in two lines using a multimode-optical fiber laser has been primarily applied.

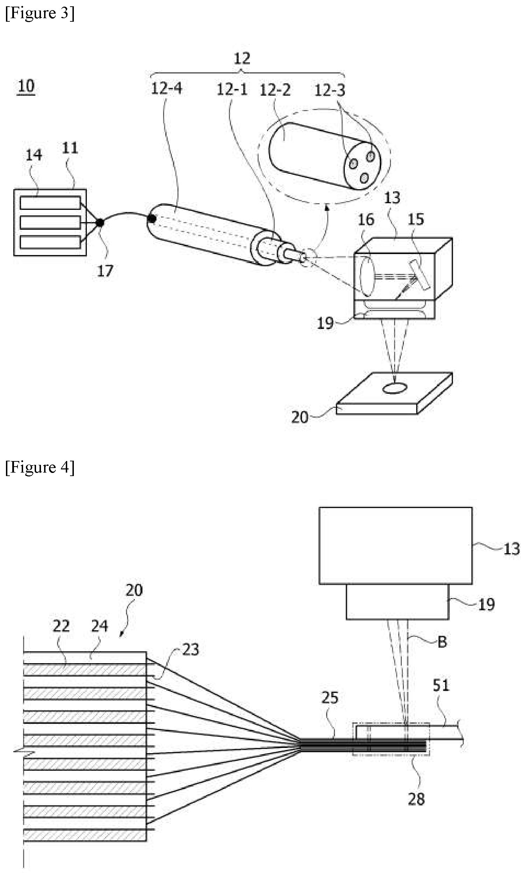

Figure 3 schematically shows constitutions of a typical multimode-optical fiber laser welding device (10).

Referring to Figure 3, the multimode-optical fiber laser welding device (10) consists of a laser pumping source (11), an optical fiber (12), and a scanner (13), and the like. The laser pumping source (11) comprises a plurality of laser diodes (14). The laser diode (14) is a semiconductor element converting electrical energy into optical energy, which provides a pumping light source. The pumping light source emitted from the laser diodes (14) passes through a center beam combiner (17) to be incident on the optical fiber (12). At this time, the optical fiber (12) includes a plastic jacket (12-4), which is the outermost layer, a cladding (12-1), which is an inner layer, and a core (12-2) located at the center. While the beam incident on the optical fiber (12) is trapped by the cladding (12-1), the laser is oscillated through the fiber (12-3), which is a medium for laser oscillation. Here, the center beam combiner (17) is a constitution that combines the outputs of multiple laser diodes (14) into one and transmits it to the optical fiber (12). Thereafter, the laser beam oscillated from the optical fiber (12) is flux-adjusted into parallel light by a collimating lens (16) of the scanner (13), and the flux-adjusted parallel light is reflected by the mirror (15) and then focused by a focusing lens (19) to be irradiated onto a surface of a workpiece (20).

In this instance, in the case of the multimode-optical fiber laser device (10), the optical fiber (12) comprises a multimode optical fiber (12). That is, the multimode optical fiber (12) has a large core (12-2) diameter (e.g., 50 µm or more) and many (e.g., 3) fibers (12-3) embedded inside the core, so that more modes can be propagated compared to a single mode. Accordingly, the multimode-optical fiber laser device (10) can obtain high output, but on the other hand, because the laser beam diameter size is large (e.g., 300 µm to 400 µm) and generates the high output, it is easy to cause thermal effects on the welded portion and surrounding components. Therefore, conventionally, when the lead portion and the tab portion were welded using the multimode-optical fiber laser device (10), spot welding was inevitable to reduce the thermal effects. Since the bead size that could be created per pulse was limited to a spot, it was inevitable to form beads in two or more rows, to increase a tensile strength by increasing the welding area.

For example, the multimode-optical fiber laser device (10) can form multiple beads in a single row through pulse welding in the welding region of the lead portion-tab portion, and then form overlapping beads in a second row adjacent to the first row using the same method.

Figure 4 is a partial cross-sectional diagram schematically showing an appearance of a lead portion-tab portion overlap region (28) that is pulse-welded in two lines using a typical multimode-optical fiber laser device (10).

Referring to Figures 3 and 4, the multimode-optical fiber laser device (10) can perform pulse welding in the lead portion-tab portion overlap region (28) as laser beams (B) oscillated from the optical fiber (12) pass through focusing lenses (19).

However, due to the characteristics of the multimode-optical fiber laser device (10) as described above, problems arose, in which pulse welding had to be performed, conventionally, in two or more lines. First, pulse welding proceeding in two lines using a multimode-optical fiber laser posed a risk of contact with internal components (e.g., pouch) of the secondary battery due to a high protrusion height of beads formed in the overlap region (28). This causes a problem of insulation breakdown of the secondary battery, which can act as a factor that degrades safety and reliability of the battery.

Also, conventional methods were difficult to ensure uniformity of weld strengths and qualities, and were highly likely to have defective welding regions with low bonding properties. When bonding of the overlap region (28) is incomplete, the lead portion-tab portion overlap region (28) has an increased electrical resistance, whereby degradation of the battery performance can occur, and in severe cases, it can lead to fatal defects, such as separation of the tab portion from the lead portion.

Furthermore, the pulse welding using a multimode-optical fiber laser device generated many spatters, whereby contamination around the overlap region was also problematic. The scattered spatters can adhere to the electrode surface, causing foreign material defects, which is a major cause of battery durability and performance degradation.

Particularly, due to the wide beam size of multimode-optical fiber lasers and the characteristics of pulse welding methods, there are problems that excessive-heat input in the overlap region occurs and thermal overlapping between adjacent overlap regions occurs. Due to the excessive-heat input and thermal overlapping, there are problems that a heat affected zone (HAZ) is excessively formed in the overlap region and the overlap region is softened. The structure softening of such a heat affected zone significantly reduces the strength of the overlap region, thereby adversely affecting joint reliability, and resulting in adverse side effects such as fatigue life shortening and corrosion resistance deterioration.

Therefore, there is a pressing need to develop a new laser welding technology capable of improving a joint strength and durability while minimizing overlap region defects.

### Disclosure

### Technical Problem

The present invention aims to solve the problems associated with conventional lead-tab laser welding technologies.

Specifically, through one example of the present invention, it is intended to provide a lead-tab laser welding method and a lead-tab laser welding device, capable of preventing excessive-heat input in a lead portion-tab portion overlap region and maximizing a joint area.

Also, through one example of the present invention, it is intended to provide a lead-tab laser welding method and a lead-tab laser welding device, capable of improving bonding properties and durability, and reducing a spatter generation amount.

Furthermore, through one example of the present invention, it is intended to provide a lead-tab laser welding method and a lead-tab laser welding device, capable of forming beads in the order of first, third, and second positions on welding targets of a lead portion-tab portion overlap region to obtain an even heat input distribution throughout the overlap region and preventing tensile strength degradation due to excessive-heat input.

In addition, through one example of the present invention, it is intended to provide a lead-tab laser welding method and a lead-tab laser welding device, capable of minimizing deformation and defect generation in a lead portion-tab portion overlap region and preventing tensile strength degradation due to excessive-heat input, as a welding unit forms multiple beads to be spaced apart from each other at predetermined intervals.

Also, through one example of the present invention, it is intended to provide a lead-tab laser welding method and a lead-tab laser welding device, capable of reducing a welding risk with weak jointing force and improving a welding quality by obtaining a high energy density with a small beam diameter using a single-mode optical fiber laser.

Furthermore, through one example of the present invention, it is intended to provide a lead-tab laser welding method and a lead-tab laser welding device, capable of reducing an instantaneous high-temperature region compared to a pulse mode to reduce surrounding heat-affected portions and minimizing changes in mechanical and chemical properties of an overlap region, by performing single-mode optical fiber laser irradiation in a continuous-wave mode.

### Technical Solution

To achieve the above-described objects, according to one example of the present invention, it provides a lead-tab laser welding method, comprising: a laser welding step of forming a plurality of beads using a welding unit in an overlap region of a lead portion and a tab portion of a secondary battery, wherein in the laser welding step, with respect to first, second, and third positions sequentially located along a first direction in the overlap region of the lead portion and the tab portion, the beads are formed in the order of the first position, the third position, and the second position.

Furthermore, according to one example of the present invention, it is a lead-tab laser welding method for joining a lead portion and a tab portion of a secondary battery, which provides a lead-tab laser welding method comprising: a seating step of disposing the lead portion and the tab portion of a secondary battery so as to overlap each other; and a laser welding step in which a welding unit forms a plurality of beads in an overlap region of the lead portion and the tab portion, wherein in the laser welding step, with respect to first, second, and third positions sequentially located along a first direction in the overlap region of the lead portion and the tab portion, the beads are formed in the order of the first position, the third position, and the second position.

The first position, the second position, and the third position may be spaced apart from each other, and an interval between the first position and the second position may be set to be greater than an interval between the second position and the third position.

In the laser welding step, when the welding unit forms a plurality of beads along the first direction, the overlap region may be divided into a first zone and a second zone based on the center of the first direction, and the beads may be alternately formed in the first zone and the second zone.

In the laser welding step, a single-mode optical fiber laser may be irradiated to form each bead.

The single-mode optical fiber laser may be formed to have a beam diameter of 13 µm to 25 µm.

In the laser welding step, the single-mode optical fiber laser may be irradiated in a continuous-wave mode to form each bead.

In the laser welding step, the plurality of beads may be formed only in one line along the first direction.

The lead portion may comprise a positive electrode lead and a negative electrode lead, and the tab portion may comprise a positive electrode tab and a negative electrode tab, and in the laser welding step, the welding unit may form the beads upon the positive electrode lead-positive electrode tab welding and the beads upon the negative electrode lead-negative electrode tab welding in different shapes.

In the laser welding step, upon the positive electrode lead-positive electrode tab welding, the welding unit may form the beads so that the width of the bead along the width direction of the positive electrode tab is smaller than the length of the bead along the length direction of the positive electrode tab.

In the laser welding step, upon the positive electrode lead-positive electrode tab welding, the welding unit may form the beads in an open curved path with different positions of welding start and end points.

The curved path may have a rotational movement angle of less than 360 degrees from the start point to the end point.

In the laser welding step, the welding unit may form the beads in an arc-shaped welding path upon the negative electrode lead-negative electrode tab welding.

Also, according to one example of the present invention, a lead-tab laser welding device is provided, which comprises a welding unit arranged so that with respect to first, second, and third positions sequentially located along a first direction in an overlap region of a lead portion and a tab portion of a secondary battery, beads are formed in the order of the first position, the third position, and the second position.

Furthermore, according to one example of the present invention, a lead-tab laser welding device may be provided, which comprises a lead-tab seating part for disposing a lead portion and a tab portion of a secondary battery to overlap each other; and a welding unit arranged so that with respect to first, second, and third positions sequentially located along a first direction in an overlap region of a lead portion and a tab portion of a secondary battery, beads are formed in the order of the first position, the third position, and the second position.

In addition, the first position, the second position, and the third position may be spaced apart from each other, and an interval between the first position and the second position may be set to be greater than an interval between the second position and the third position.

Also, when forming a plurality of beads along the width direction of the lead-tab, the welding unit may be arranged to divide the lead-tab into a first zone and a second zone based on the center of the width direction center thereof so that the beads are alternately formed in the first zone and the second zone.

Furthermore, the welding unit may be arranged so that a single-mode optical fiber laser is irradiated to form each bead.

In addition, the welding unit may be arranged so that a single-mode optical fiber laser is irradiated in a continuous-wave mode to form each bead.

Also, the welding unit may irradiate the lead portion-tab portion overlap region with a laser beam to form only one line of welding beads along the width direction thereof.

Furthermore, the welding unit may be arranged to form the beads so that the width of the bead along the width direction of the positive electrode tab is smaller than the length of the bead along the length direction of the positive electrode tab upon the positive electrode lead-positive electrode tab welding.

In addition, the welding unit may comprise a laser oscillating part for oscillating a laser beam of a single-mode optical fiber laser, a beam control part for adjusting a diameter and a path of the laser beam oscillated from the laser oscillating part, and a focus adjustment lens part for focusing the laser beam passing through the beam control part on the lead portion-tab portion overlap region.

### Advantageous Effects

The lead-tab laser welding method and lead-tab laser welding device of the present invention can obtain effects such as prevention of excessive-heat input upon welding of the lead-tab overlap region, maximization of the joint area, enhancement of bonding properties and durability, and moreover spatter generation reduction.

Specifically, the lead-tab laser welding method and lead-tab laser welding device according to one example of the present invention can have a time for which the preceding bead can be sufficiently cooled when the welding unit forms alternately multiple beads in the first and second zones on the left and right sides of the lead tab, whereby the heat generated by the previously formed bead can have less thermal effect on generation of a subsequent adjacent bead, so that it is possible to prevent an increase in bead size due to thermal overlapping and tensile strength deterioration of the welded lead-tab.

The lead-tab laser welding method and lead-tab laser welding device according to one example of the present invention can minimize deformation and defect generation in the lead portion-tab portion overlap region as the welding unit forms multiple beads to be spaced apart at predetermined intervals. It is possible to prevent tensile strength deterioration due to excessive-heat input caused by the bead intervals, which are too narrow, in conventional techniques.

The single-mode optical fiber lasers have an advantage of enabling precise welding due to their small beam diameters and short focal lengths. Therefore, the lead-tab laser welding method and lead-tab laser welding device according to one example of the present invention can obtain a high energy density with a small beam diameter using a single-mode optical fiber laser. Through this, it is possible to improve a welding quality while reducing a welding risk with weak jointing force.

The lead-tab laser welding method and lead-tab laser welding device according to one example of the present invention can lower peak power compared to a pulse mode and continuously supply energy, as a single-mode optical fiber laser is irradiated in a continuous-wave mode, so that it is possible to prevent instantaneous high-temperature formation in the overlap region, thereby reducing formation of a surrounding heat-affected zone.

The lead-tab laser welding method and lead-tab laser welding device according to one example of the present invention forms one line of welding beads in the lead portion-tab portion overlap region, whereby the heat input control for each bead is easy, and it is possible to ensure sufficient intervals between the beads, compared to the conventional case where the welding beads are formed in two or more lines, so that it is possible to prevent tensile strength deterioration due to excessive-heat input of the overlap region.

The lead-tab laser welding method and lead-tab laser welding device according to one example of the present invention can minimize the thermal influence between beads located on both sides of the welding direction and increase the melting area in the length direction of the electrode lead, by forming beads with an elongated curved path in the length direction of the electrode lead in the positive electrode lead portion-tab portion overlap region.

The lead-tab laser welding method and lead-tab laser welding device according to one example of the present invention form beads in a path where the welding start portion and end portion do not meet with each other and the outer side and the inner side are opened in the overlap region of the positive electrode lead and tab, whereby it is possible to prevent tensile strength deterioration due to excessive-heat input at the start and end points.

The lead-tab laser welding method and lead-tab laser welding device according to one example of the present invention adopt a path of beads to be formed in the overlap region of the negative electrode lead and tab as a circular path, whereby it is possible to improve the jointing strength by maximizing the overlap region area.

### Description of Drawings

Figure 1 is an exploded perspective diagram schematically showing components of a typical secondary battery.
Figure 2 is a cross-sectional diagram showing an intra-partial appearance of a typical secondary battery.
Figure 3 is a schematic diagram schematically showing components of a typical multimode-optical fiber laser device.
Figure 4 is a partial cross-sectional diagram schematically showing an appearance of a lead portion-tab portion overlap region, which is pulse-welded in two lines using a typical multimode-optical fiber laser device.
Figure 5 is a plan view schematically showing an appearance of a secondary battery according to one example of the present invention.
Figure 6 is a block diagram conceptually showing components of a lead-tab laser welding device according to one example of the present invention.
Figure 7 is a schematic diagram schematically showing components of a lead-tab laser welding device according to one example of the present invention.
Figure 8 is a partial cross-sectional diagram schematically showing an appearance of a positive electrode lead-positive electrode tab overlap region welded using a lead-tab laser welding device according to one example of the present invention.
Figure 9 is a partial cross-sectional diagram schematically showing an appearance of a negative electrode lead-negative electrode tab overlap region welded using a lead-tab laser welding device according to one example of the present invention.
Figure 10 is a perspective diagram schematically showing a lead portion-tab portion overlap region welded using a lead-tab laser welding device according to one example of the present invention.
Figure 11 is a partial plan view for showing formation sequence of beads formed using a lead-tab laser welding device according to one example of the present invention.
Figure 12 is a partial plan view showing a bead path and a bead shape formed upon positive electrode lead-tab welding in a lead-tab laser welding method according to one example of the present invention.
Figure 13 is a partial plan view showing a bead path shape formed upon positive electrode lead-tab welding in a lead-tab laser welding method according to another example of the present invention.
Figure 14 is a partial plan view showing a bead path shape formed upon negative electrode lead-tab welding in a lead-tab laser welding method according to one example of the present invention.
Figure 15 is a flowchart showing steps of a lead-tab laser welding method according to one example of the present invention.

### Mode for Invention

Hereinafter, a lead-tab laser welding device (100) and a lead-tab laser welding method (200) according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

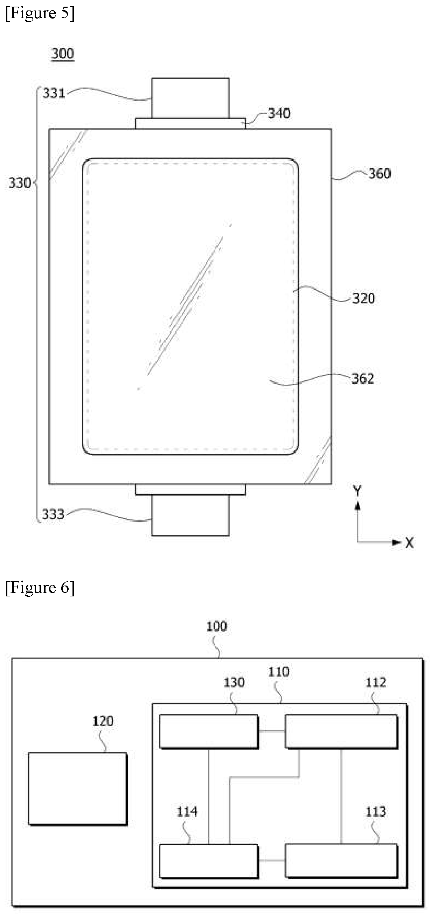

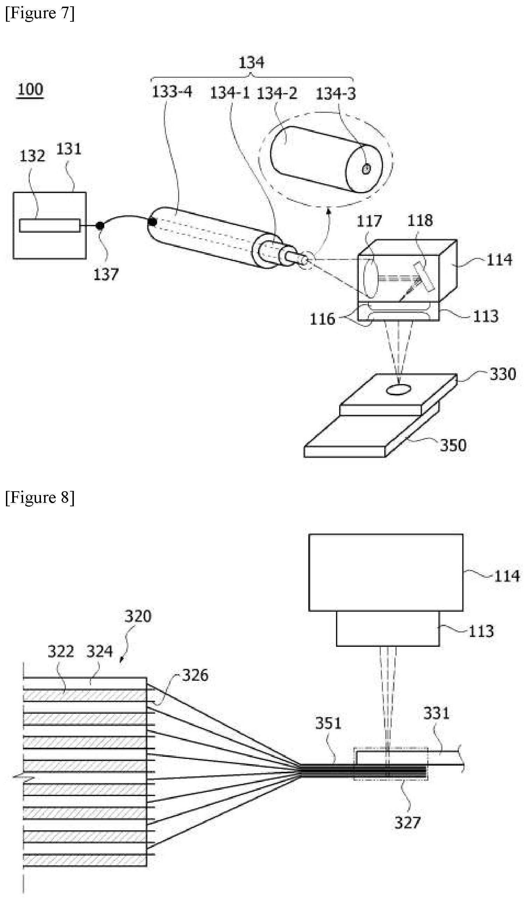

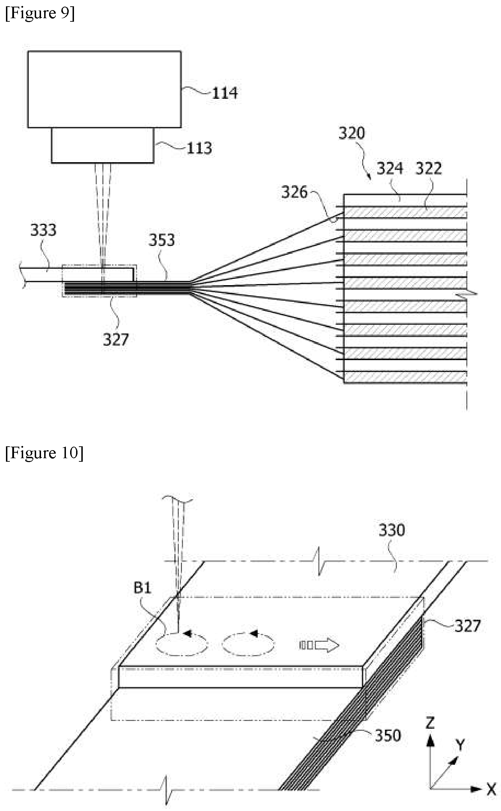

Figure 5 is a plan view schematically showing an appearance of a secondary battery (300) according to one example of the present invention. Figure 6 is a block diagram conceptually showing components of a lead-tab laser welding device (100) according to one example of the present invention. Figure 7 is a schematic diagram schematically showing components of a lead-tab laser welding device (100) according to one example of the present invention. Figure 8 is a partial cross-sectional diagram schematically showing an appearance of a lead portion (330)-tab portion (350) overlap region (327) welded using a lead-tab laser welding device (100) according to one example of the present invention. Figure 9 is a partial cross-sectional diagram schematically showing an appearance of a negative electrode lead-negative electrode tab overlap region welded using a lead-tab laser welding device according to one example of the present invention. Then, Figure 10 is a perspective diagram schematically showing a lead portion (330)-tab portion (350) overlap region (327) welded using a lead-tab laser welding device (100) according to one example of the present invention.

Referring to Figures 5 to 10, the lead-tab laser welding device (100) according to one example of the present invention comprises a lead-tab seating part (120) disposing a lead portion (330) and a tab portion (350) of a secondary battery (300) to overlap each other. In addition, the lead portion (330) and the tab portion (350) of the secondary battery (300) are seated in a state where they are overlapped with each other on the lead-tab seating part (120).

Here, the secondary battery (300) comprises an electrode assembly (320) and a pouch case (360) in which an electrolyte is accommodated, as in Figure 5. As in Figure 8, the electrode assembly (320) comprises a positive electrode (324) and a negative electrode (322), and a separator (326) interposed between the positive electrode (324) and the negative electrode (322). The secondary battery (300) may comprise a tab portion (350) provided on each of the positive electrode (324) and the negative electrode (322). For example, the tab portion (350) may comprise a positive electrode tab (351) and a negative electrode tab (353). Here, the positive electrode tab (351) may be an extension portion of a current collector (e.g., aluminum foil) to which a positive electrode active material is applied, and the negative electrode tab (353) may be an extension portion of a current collector (e.g., copper foil) to which a negative electrode active material is applied.

In addition, the secondary battery (300) must connect the tab portion (350) of the electrode assembly (320) and the lead portion (330) that serves as an external terminal, to draw electric current to the outside. Here, the lead portion (330) may comprise a positive electrode lead (331) and a negative electrode lead (333). For example, the positive electrode lead (331) may be formed of an aluminum alloy material, and the negative electrode lead (333) may be formed of a copper alloy material. In a process of manufacturing a secondary battery (300), the lead portion (330) and the tab portion (350) are overlapped to be joined by laser welding, where the positive electrode lead (331) and the negative electrode lead (333) are joined to the positive electrode tab (351) and the negative electrode tab (353), respectively.

In this instance, to manage the welding quality of the lead portion (330)-tab portion (350) overlap region (327), welding defects must be minimized and sufficient joining strength must be secured. For example, defects such as pores or cracks may degrade electrical performance and mechanical reliability. Furthermore, spatter generation must be suppressed to prevent electrode contamination, and thermal deformation and residual stress must be minimized to prevent electrode damage.

Meanwhile, the lead-tab seating part (120) of the present invention serves to dispose the lead portion (333) and tab (350) of the secondary battery (300) by overlapping them. Specifically, as in Figure 8, the lead-tab seating part (120) is provided to align and position the positive electrode lead (331) and the positive electrode tab (351) so that they overlap. As in Figure 9, the lead-tab seating part (120) is arranged so that the negative electrode lead (333) and the negative electrode tab (353) are aligned and disposed to be overlapped.

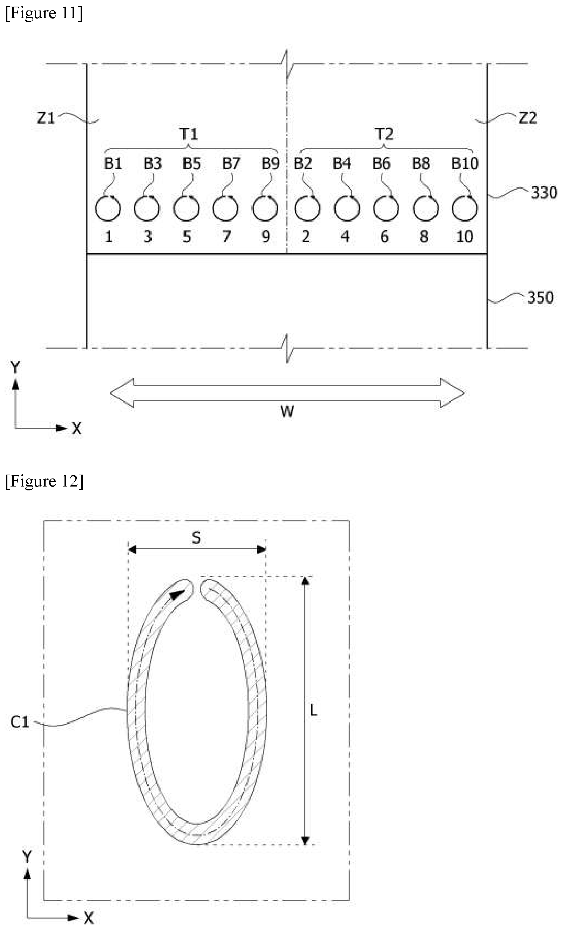

Figure 11 is a partial plan view for showing formation sequence of beads formed using a lead-tab laser welding device (100) according to one example of the present invention.

Referring to Figures 6, 10, and 11, with respect to a first position (1 of Figure 10), a second position (3 of Figure 10), and a third position (2 of Figure 10), which are sequentially located along a first direction (X-axis direction) within the overlap region (327), the welding unit (110) of the lead-tab laser welding device (100) according to one example of the present invention is arranged to form beads in the order of the first position (1), the third position (2) and the second position (3). Here, the first direction may be the width direction (W) of the lead or tab.

In this document, the X-axis direction may represent the width direction of the tab (or lead), the Z-axis direction may represent the laminating direction of the tab and the lead, and the Y-axis direction may represent the length direction of the tab (or lead).

That is, the lead-tab laser welding device (100) of the present invention proceeds in the order of first forming a bead (B1) at a first position (1), and then, forming a second bead (B2) at a third position (2) further away in the first direction (X-axis direction, width direction of the electrode tab), rather than forming a bead at an immediately adjacent second position (3), and thirdly forming a bead at a second position (3) located between the first position (1) and the third position (2). Of course, the remaining beads (B5, B6, B7, B8, B9, B10) may also be formed using such a welding order rule. That is, the fifth bead (B5), the sixth bead (B6), the seventh bead (B7), the eighth bead (B8), the ninth bead (B9), and the tenth bead (B10) may be welded in this order.

Furthermore, in the present invention, the first position (1), the second position (3), and the third position (2) are spaced apart from each other, and the interval between the first position (1) and the second position (3) may be set to be greater than the interval between the second position (3) and the third position (2).

The welding unit (110) of the lead-tab laser welding device (100) in the present invention may be arranged so that when the lead portion (330) and the tab portion (350) are welded, a plurality of beads is formed along the width direction (W) of the lead-tab, but a first zone (Z1) and a second zone (Z2) are divided on the left and right based on the center of the width direction (W) of the lead portion (330), and the beads are alternately formed in the first zone (Z1) and the second zone (Z2) thus divided.

At this time, the welding unit (110) may form one line of a first bead row (T1) and a second bead row (T2) arranged in the width direction (W) in each of the first zone (Z1) and the second zone (Z2). At this time, the first bead row (T1) may comprise a plurality of beads (B1, B3, B5, B7, B9), and the second bead row (T2) may comprise a plurality of beads (B2, B4, B6, B8, B10). For convenience of explanation in the drawing, an example of forming about 10 beads has been described, but the number of beads is not necessarily limited to 10. That is, the number of beads in the lead portion-tab portion overlap region may be, for example, 28.

Referring to Figure 11, when bead formation positions spaced apart at regular intervals from number 1 to number 10 are designated on the lead portion (330), the left side may be defined as the first zone (Z1) and the right side can be defined as the second zone (Z2), based on the center of the width direction (W) of the lead portion (330) between 9 and 2.

The welding unit (110) may form beads one at a time by alternately selecting one bead (sequentially selecting B1, B3, B5, B7, and B9) of the first zone (Z1) and the beads (sequentially selecting B2, B4, B6, B8, and B10) of the second zone (Z2) from the first bead row (T1) of the first zone (Z1) and the second bead row (T2) of the second zone (Z2). Of course, from the perspective of each of the first zone (Z1) and the second zone (Z2) of the lead (350), the beads (B1 to B10) are sequentially generated in the width direction (W).

Also, the lead-tab laser welding device (100) of the present invention comprises a welding unit (110). Furthermore, to weld the lead portion (330) and tab portion (350) as overlap-disposed to each other, the welding unit (110) may be arranged to irradiate them with a single-mode optical fiber laser.

More specifically, as in Figures 6 and 7, the welding unit (110) of the lead-tab laser welding device (100) according to one example of the present invention comprises a laser oscillating part (130) that oscillates a laser beam in a single-mode optical fiber laser manner. It may comprise a pumping source (131), an optical fiber (134), and a center beam combiner (137).

For example, a laser diode (132) is used in the pumping source (131), where pumping light generated from the laser diode (132) is incident on the inside of the optical fiber (134) via the center beam combiner (137). Here, the optical fiber (134) comprises a cladding (134-1), a core (134-2), a single fiber (134-3), and a plastic jacket (134-4). After the pumping light is incident, the pumping light is trapped inside the core (134-2) by the cladding (134-1) within the optical fiber (134), and simultaneously laser oscillation occurs through the fiber (134-3), which is a medium for laser oscillation.

Also, the optical fiber (134) used in the single-mode optical fiber laser manner has a small core (134-1) diameter (about 14 µm) and operates in a single mode with a single fiber (138).

Furthermore, as in Figure 6, the welding unit (110) comprises a beam control part (112) that controls the diameter and path of the laser beam oscillated from the laser oscillating part (130). Here, the beam control part (112) performs a function of optimizing a bead shape and a penetration depth of the overlap region (327) by controlling a focal size of the laser beam.

More specifically, as in Figure 7, the beam control part (112) may comprise a scanner (114). The scanner (114) may be provided with a collimating lens (117) for adjusting the beam diameter. The scanner (114) may comprise a mirror (118) for controlling a beam traveling direction, i.e., a beam path.

Here, the collimating lens (117) functions to convert diverging light emitted from the laser oscillating part (130) into parallel light. The diverging light tends to spread out as it moves away from the light source, whereby the beam diameter gradually increases. To prevent this, the beam diverged from the optical fiber (134) is passed through the collimating lens (117) to parallelize the beam. By adjusting a focal distance of the collimating lens (117), the diameter of the parallel light, i.e., the beam diameter, may be adjusted to a desired size.

Also, the collimated beam is reflected by the mirror (118) inside the scanner (114), whereby the traveling direction changes. Depending on the rotation angle of the mirror (118), the beam may be moved to a desired point on the surface of the overlap region (327).

Furthermore, the welding unit (110) may comprise a control part (114). The control part (114) may be arranged to control the laser oscillating part (111), the beam control part (112), and a focus adjustment lens part (113). A user can set how the control part (114) controls the laser oscillating part (111), the beam control part (112), the focus adjustment lens part (113), and the like, by using control software. Through this, the user can designate formation locations of multiple beads (B1 to B10) and a welding path (pattern) of the bead (B1). Accordingly, the control part (114) controls the respective components according to the user's settings to perform the bead formation and the welding process.

In addition, as in Figure 6, the welding unit (110) may comprise a focus adjustment lens part (113) that focuses the laser beam passing through the beam control part (112) on the lead portion (330)-tab portion (350) overlap region (327). The focus adjustment lens part (113) precisely focuses the laser beam on the surface of the overlap region (327) to maximize an energy transfer efficiency.

More specifically, as in Figure 7, the focus adjustment lens part (113) of the lead-tab laser welding device (100) according to one example of the present invention may comprise an F-theta lens (116). The F-theta lens (116) is an optical system used for the laser beam to be irradiated with a uniform beam diameter onto a flat surface.

Also, the F-theta lens (116) is controlled by the control part (114). To form multiple beads to be aligned in the first direction (X-axis direction), the control part (114) may control the F-theta lens (116) to move the beam's focus in the first direction.

Furthermore, the control part (114) may move the laser beam to form beads along a set welding path by controlling the F-theta lens (116).

Meanwhile, the welding unit (110) of the lead-tab laser welding device (100) in the present invention may form the respective beads by irradiating them with a single-mode optical fiber laser. Accordingly, it is possible to obtain a high beam quality and a small beam size (about 14 µm) compared to multimode-optical fiber laser devices.

The welding unit (110) of the lead-tab laser welding device (100) in the present invention may form the respective beads by irradiating them with a mode optical fiber laser in a continuous-wave mode.

Meanwhile, the welding unit (110) of the lead-tab laser welding device (100) according to one example of the present invention may form welding beads along the width direction of the lead portion (330)-tab portion (350) overlap region (327). In this instance, the present invention may form multiple beads at least in one or more lines in the width direction. However, compared to the case of one line, when two or more lines of beads are formed, there is a disadvantage that the bead size increase and the tensile strength deterioration easily occur due to excessive-heat input between the respective beads of the two adjacent lines. Therefore, the present invention can preferably irradiate them with the laser beam so that the welding beads are formed only in a single line along the width direction of the lead portion (330)-tab portion (350) overlap region (327).

Figure 12 is a partial plan view showing a bead path and a bead shape formed upon positive electrode lead (331)-positive electrode tab (351) welding in a lead-tab laser welding method (200) according to one example of the present invention.

Referring to Figures 5, 8, 9, and 12, the positive electrode lead (331) of the secondary battery (300) may comprise an aluminum alloy material. Also, the negative electrode lead (333) may comprise a copper alloy material. Here, aluminum is disadvantageous in securing weld strength due to differences in physical properties compared to copper. Accordingly, the positive electrode lead (331)-positive electrode tab (351) overlap region (327) needs to have a different welding path from the welding path applied to the negative electrode lead (333)-negative electrode tab (353) overlap region (327), to obtain a sufficient weld strength.

For example, the welding unit (110) of the lead-tab laser welding device (100) according to one example of the present invention performs welding by irradiating it in an elongated curved path in the length direction (Y-axis direction in Figure 5) of the positive electrode lead (331) with a laser beam upon the positive electrode lead (331) and the positive electrode tab (351) welding. Specifically, as in Figure 12, the welding unit (110) may form a plurality of beads (C1) in a curved path with a shape that the path width (S) is narrower than the path length (L) of the direction (Y-axis direction) perpendicular to the welding direction (X-axis direction) of the lead-tab in the positive electrode lead (331)-positive electrode tab (351) overlap region (327). For example, the ratio of the length (L) to the width (S) in the path may be 1:0.45.

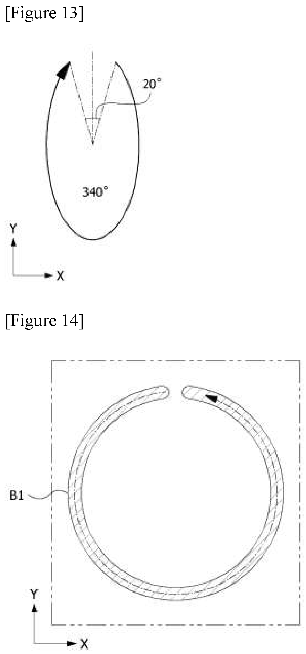

Figure 13 is a partial plan view showing a generation path shape of a bead (C1) formed upon positive electrode lead (331)-positive electrode tab (351) welding in a lead-tab laser welding method according to another example of the present invention.

Referring to Figures 8, 12, and 13, the curved path applied by the welding unit (110) of the present invention may preferably have a shape where the outer side and the inner side are opened. That is, the curved path of the bead (C1) may have a shape in which the start point and the end point do not meet, and two points are spaced apart by a predetermined distance. For example, as in Figure 13, the welding unit (110) may form the bead (C1) by irradiating the positive electrode lead (331)-positive electrode tab (351) overlap region (327) in the curved path which is opened upward from the inner side with the laser beam.

Furthermore, the lead-tab laser welding device (100) according to another example of the present invention may form an open curved bead (C1) applied upon the welding of the positive electrode lead (331) and the positive electrode tab (351) with a rotation range of less than 360 degrees. That is, the generation path of the bead (C1) formed by the welding unit (110) may be formed as a partial arc-shaped path in which the sum of the angles moving from the start point to the end point is less than 360 degrees.

For example, the generation path of the bead (C1) may be formed with a rotation range in an angle of 340 degrees. Accordingly, in the open curved bead of the present invention, the start and end points exist at positions spaced apart from each other.

Figure 14 is a partial plan view showing a bead path shape formed upon negative electrode lead (333)-negative electrode tab (353) welding in a lead-tab laser welding method (200) according to one example of the present invention.

Referring to Figure 14 together with Figure 9, the welding unit (110) of the lead-tab laser welding device (100) according to one example of the present invention can be arranged to form a bead (B1) in an arc-shaped path upon welding a negative electrode lead (333) and a negative electrode tab (353).

That is, as illustrated in Figure 9, when the welding unit (110) irradiates the overlap region (327) where the negative electrode lead (333) and the negative electrode tab (353) are overlapped with a laser beam, it forms a bead (B1) while drawing a circular trajectory. At this time, in the bead (B1), the end point of the continuous laser irradiation may be positioned adjacent to the start point. However, the start and end points of the arc-shaped path need not meet.

As previously described, the negative electrode lead (333) and the tab are primarily made of a copper material. Copper has excellent thermal conductivity and low laser absorption rate, so that it is appropriate to secure a sufficient melting area.

Hereinafter, a lead-tab laser welding method (200) according to one example of the present invention will be described.

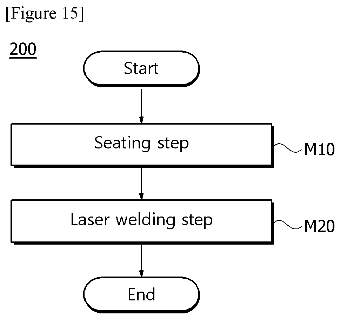

Figure 15 is a flowchart showing steps of a lead-tab laser welding method (200) according to one example of the present invention.

Referring to Figure 15 together with Figures 6 to 14, a lead-tab laser welding method (200) according to one example of the present invention will be described.

The lead-tab laser welding method (200) according to another example of the present invention comprises a seating step (M01) of disposing a lead portion (330) and a tab portion (350) of a secondary battery (300) to overlap each other.

First, in the seating step (M01), the positive electrode lead (331) and the positive electrode tab (351), or the negative electrode lead (333) and the negative electrode tab (353) of the secondary battery (300) are aligned and disposed to overlap each other by the lead-tab seating part (120). At this time, the lead portion (330) and the tab portion (350) must be overlapped by an appropriate length, in consideration of electrical and mechanical characteristics of the overlap region (327).

If the overlapping length is too short, contact resistance may increase, thereby resulting in electrical loss, and conversely, if the overlapping length is excessively long, it may occupy an unnecessary space, thereby lowering an energy density of the battery. Therefore, in the seating step (M01), it is important to set the overlapping length so that optimal conditions for the lead portion (330)-tab portion (350) overlap region (327) can be secured.

Meanwhile, referring to Figure 11, a lead-tab laser welding method (200) according to another example of the present invention comprises a laser welding step (M02). In the laser welding step (M02), the welding unit (110) performs welding by irradiating the lead portion (330)-tab portion (350) overlap region (327) disposed on the lead-tab seating part (120) with an optical fiber laser.

The lead-tab laser welding method (200) according to another example of the present invention comprises a laser welding step (M02). As in Figure 11, in the laser welding step (M02), the welding unit (110) forms a plurality of beads spaced apart at predetermined intervals in the order of a first position (1), a third position (2), and a second position (3), which are spaced apart from each other, sequentially positioned along the first direction (X-axis direction) of the lead portion (330)-tab portion (350) overlap region (327) disposed on the lead-tab seating part (120). In addition, here, the first position (1), the second position (3), and the third position (2) are spaced apart from each other, where the interval between the first position (1) and the second position (3) may be set to be greater than the interval between the second position (3) and the third position (2).

The lead-tab laser welding method (200) according to one example of the present invention forms a plurality of beads along the width direction (W) of the lead-tab when the welding unit (110) welds the lead portion (330) and the tab portion (350) in the laser welding step (M02), wherein the lead-tab may be divided into a first zone (Z1) and a second zone (Z2) on the left and right based on the center of the width direction (W), and the beads may alternately be formed in the first zone (Z1) and the second zone (Z2).

At this time, as in Figure 11, the lead-tab laser welding method (200) of the present invention divides the lead portion (330) into a first zone (Z1) and a second zone (Z2) on the left and right based on its width direction (W) center to form beads alternately in the respective zones, where a single line of a plurality of beads (B1 to B10) arranged in the width direction (W) may be formed in the respective zones.

For example, when bead formation positions are designated at a regular interval from numbers 1 to 10 along the width direction (W) length of the lead portion (330), based on the width direction (W) center of the lead portion (330) between 5 and 6, the left side and the right side may be defined as a first zone (Z1) and a second zone (Z2), respectively.

The lead-tab laser welding method (200) according to one example of the present invention may form beads, while the welding unit (110) repeatedly moves welding targets forward and backward in the welding progress direction, to alternately form beads of the first zone (Z1) and beads of the second zone (Z2).

Meanwhile, in the laser welding step (M02), a single-mode optical fiber laser may be irradiated to form each bead. In addition, the lead-tab laser welding method (200) according to one example of the present invention may use a single-mode optical fiber laser having a narrow beam diameter ranging from 13 µm to 25 µm, which is oscillated from the laser oscillating part (130) of the welding unit (110), in the laser welding step (M02).

The present invention may form each bead by irradiating it with the single-mode optical fiber laser in a continuous-wave mode in the laser welding step (M02).

Meanwhile, the lead-tab laser welding method (200) according to one example of the present invention may form only one line of welding beads (B1, B2, B3, B4, B5, B6, B7, B8, B9, B10) in the width direction (W) of the lead portion (330) and the tab portion (350).

Meanwhile, referring to Figure 12, in the lead-tab laser welding method (200) according to one example of the present invention, the welding unit (110) may differently form a bead shape upon the positive electrode lead (331)-positive electrode tab (351) welding and a bead shape upon the negative electrode lead (333)-negative electrode tab (353) welding in the laser welding step.

Furthermore, the lead-tab laser welding method (200) according to one example of the present invention is characterized in that the welding unit (110) forms a bead (C1) with a narrow width (S) in the welding direction and a long path in the length (L) direction upon the positive electrode lead (331)-positive electrode tab (351) welding. This is to obtain a bead (C1) with a shape close to an oval that is vertically elongated along the welding line, unlike conventional circular beads.

Meanwhile, referring to Figures 12 and 13, in the welding method (200) of the present invention, the welding unit (110) may form a bead (C1) with an open curved path where the start and end points are at different locations upon the positive electrode lead

(331)-positive electrode tab (351) welding. For example, the path of the bead (C1) formed by the welding unit (110) may be a C shape where the start portion and the end potion of the bead do not meet.

That is, the curved path of the bead (C1) may be a form where the start and end points do not meet, and two points are spaced apart at a predetermined distance. For example, the welding unit (110) may form a bead by irradiating the positive electrode lead (331)-positive electrode tab (351) overlap region (327) in a curved path opened from the inside to the top with a laser beam.

Furthermore, in the lead-tab laser welding method (200) according to one example of the present invention, the welding unit (110) may form an open curved bead (C1) to be applied upon the positive electrode lead (331)-positive electrode tab (351) welding in a rotation range of less than 360 degrees. That is, the welding path of the bead (C1) formed by the welding unit (110) may be formed as a partial arc-shaped path in which the sum of the angles moving from the start point to the end point is less than 360 degrees.

For example, the path of the bead (C1) may be formed to have a rotation range in an angle of 340 degrees. Accordingly, the open curved bead (C1) of the present invention exists at positions where the start point and the end point are spaced apart from each other.

Meanwhile, referring to Figures 9 and 14, in the lead-tab laser welding method (200) according to one example of the present invention, when the welding unit (110) welds the negative electrode lead (333)-negative electrode tab (353), it may weld the lead-tab by forming a bead (B1) in an arc-shaped path.

That is, when the welding unit (110) irradiates the overlap region (327) where the negative electrode lead (333) and the negative electrode tab (353) overlap with a laser beam, it forms a bead (B1) while drawing a circular trajectory, as in Figure 14. At this time, in the bead (B1), the end point of the continuous laser irradiation may be positioned adjacent to the start point. However, the start and end points of the arc-shaped path need not meet.

Meanwhile, referring to Figures 5 to 9, the present application provides a secondary battery (300) manufactured using the welding device (100) and welding method (200) according to one example of the present invention. Specifically, the secondary battery (300) may comprise a positive electrode lead (331) and a positive electrode tab (351), and a negative electrode lead (333) and a negative electrode tab (353), which are welded to each other using the welding device (100) and the welding method (200). The secondary battery

(300) of the present invention comprises an electrode assembly (320), an electrolyte (not shown), and a pouch case (360).

As in Figure 8, the electrode assembly (320) has a structure in which positive electrodes (322) and negative electrodes (324) are alternately laminated with separators (326) interposed therebetween. Then, the plurality of negative electrodes (324) and the plurality of positive electrodes (322) provided in the electrode assembly (320) may each have a structure in which they are electrically connected to the positive electrode tab (351) and the negative electrode tab (353). Then, each bundle of the positive electrode tabs (351) and the negative electrode tabs (353) may be welded and connected to the positive electrode lead (331) and the negative electrode lead (333).

In the manufacturing process of the pouch case (360), a pouch film is first processed using a molding device (not shown) so that an accommodating portion (362) capable of accommodating an electrode assembly (320) is formed. In this instance, the molding device gives the pouch film a concave shape corresponding to the accommodating portion (362) using a mold.

As in Figure 5, the electrode assembly (320) may be accommodated in the accommodating portion (362) inside the pouch case (360). Specifically, in the electrode insertion step, the electrode assembly (320) may be automatically inserted into the accommodating portion (362) formed during the pouch manufacturing step using a loading device (not shown).

Then, the pouch case (360) may be injected with an electrolyte (not shown) in a state where the electrode assembly (320) is accommodated therein. The electrolyte injection is performed after the electrode assembly (320) is seated in the accommodating portion (362) inside the pouch case (360).

The secondary battery (300) may be manufactured in a form in which a portion of each of the positive electrode lead (331) and the negative electrode lead (333), which is connected to each of the positive electrode tab (351) and the negative electrode tab (353), between a pouch film positioned relatively above and a pouch film positioned below protrudes therethrough outside the pouch case (360).

At this time, in the electrode lead portion (330), for electrical insulation with the pouch case (360), a protective film (340) may be wrapped around a portion in contact with the pouch case (360). The protective film (340) may comprise an electrically insulating material.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to a lead-tab laser welding method and a lead-tab laser welding device, related to one example of the present invention, it is possible to obtain effects such as prevention of excessive-heat input upon welding of the lead-tab overlap region, maximization of the joint area, enhancement of bonding properties and durability, and moreover spatter generation reduction.

## Claims

1. A lead-tab laser welding method, comprising: a laser welding step of forming a plurality of beads using a welding unit in an overlap region of a lead portion and a tab portion of a secondary battery, wherein
in the laser welding step, with respect to first, second, and third positions sequentially located along a first direction in the overlap region of the lead portion and the tab portion, the beads are formed in the order of the first position, the third position, and the second position.

2. The lead-tab laser welding method according to claim 1, wherein
the first position, the second position, and the third position are spaced apart from each other, and an interval between the first position and the second position is set to be greater than an interval between the second position and the third position.

3. The lead-tab laser welding method according to claim 1, wherein
in the laser welding step,
when the welding unit forms a plurality of beads along the first direction, the overlap region is divided into a first zone and a second zone based on the center of the first direction, and the beads are alternately formed in the first zone and the second zone.

4. The lead-tab laser welding method according to claim 1, wherein
in the laser welding step, a single-mode optical fiber laser is irradiated to form each bead.

5. The lead-tab laser welding method according to claim 4, wherein
the single-mode optical fiber laser is formed to have a beam diameter of 13 µm to 25 µm.

6. The lead-tab laser welding method according to claim 1, wherein
in the laser welding step, the single-mode optical fiber laser is irradiated in a continuous-wave mode to form each bead.

7. The lead-tab laser welding method according to claim 1, wherein
in the laser welding step,
the plurality of beads is formed only in one line along the first direction.

8. The lead-tab laser welding method according to claim 1, wherein
the lead portion comprises a positive electrode lead and a negative electrode lead, and
the tab portion comprises a positive electrode tab and a negative electrode tab, and
in the laser welding step,
the welding unit forms the beads upon the positive electrode lead-positive electrode tab welding and the beads upon the negative electrode lead-negative electrode tab welding in different shapes.

9. The lead-tab laser welding method according to claim 8, wherein
in the laser welding step,
upon the positive electrode lead-positive electrode tab welding, the welding unit forms the beads so that the width of the bead along the width direction of the positive electrode tab is smaller than the length of the bead along the length direction of the positive electrode tab.

10. The lead-tab laser welding method according to claim 9, wherein
in the laser welding step,
upon the positive electrode lead-positive electrode tab welding, the welding unit forms the beads in an open curved path with different positions of welding start and end points.

11. The lead-tab laser welding method according to claim 8, wherein
in the laser welding step, the welding unit forms the beads in an arc-shaped welding path upon the negative electrode lead-negative electrode tab welding.

12. A lead-tab laser welding device comprising a welding unit arranged so that with respect to first, second, and third positions sequentially located along a first direction in an overlap region of a lead portion and a tab portion of a secondary battery, beads are formed in the order of the first position, the third position, and the second position.

13. The lead-tab laser welding device according to claim 12, wherein
the first position, the second position, and the third position are spaced apart from each other, and an interval between the first position and the second position is set to be greater than an interval between the second position and the third position.

14. The lead-tab laser welding device according to claim 12, wherein
when forming a plurality of beads along the width direction of the lead-tab, the welding unit is arranged to divide the lead-tab into a first zone and a second zone based on the center of the width direction center thereof so that the beads are alternately formed in the first zone and the second zone.

15. The lead-tab laser welding device according to claim 12, wherein
the welding unit forms each bead as a single-mode optical fiber laser is irradiated.

16. The lead-tab laser welding device according to claim 12, wherein
the welding unit forms each bead as a single-mode optical fiber laser is irradiated in a continuous-wave mode.

17. The lead-tab laser welding device according to claim 12, wherein
the welding unit irradiates the lead portion-tab portion overlap region with a laser beam to form only one line of welding beads along the width direction thereof.

18. The lead-tab laser welding device according to claim 12, wherein
the welding unit is arranged to form the beads so that the width of the bead along the width direction of the positive electrode tab is smaller than the length of the bead along the length direction of the positive electrode tab upon the positive electrode lead-positive electrode tab welding.

19. The lead-tab laser welding device according to claim 12, wherein
the welding unit comprises:
a laser oscillating part for oscillating a laser beam of a single-mode optical fiber laser;
a beam control part for adjusting a diameter and a path of the laser beam oscillated from the laser oscillating part; and
a focus adjustment lens part for focusing the laser beam passing through the beam control part on the lead portion-tab portion overlap region.
